# FASCICULE DE BREVET EUROPEEN

(11) **EP 2 876 346 B1**
(45) Date de publication et mention de la délivrance du brevet: **22.06.2016**
(21) Numéro de dépôt: 14192918.2
(22) Date de dépôt: 12.11.2014
(51) Int. Cl.: F16L 55/027

(54) **Dispositif d'amortissement de vibrations dans un circuit hydraulique de transmission d'effort, notamment pour la commande hydraulique d'embrayage**
Vorrichtung zur Schwingungsdämpfung in einem hydraulischen Kraftübertragungskreislauf, insbesondere für die hydraulische Kupplungssteuerung
Device for damping vibrations in a hydraulic force-transmission circuit, in particular for hydraulic clutch control

(30) Priorité: 26.11.2013 FR 1361632
(43) Date de publication de la demande: 27.05.2015
(73) Titulaire: Valeo Embrayages, 80009 Amiens Cedex 2 (FR)
(72) Inventeur: Mollier, Christophe, 80080 Amiens (FR); Sevinc, Volkan, 16170 Bursa (TR)
(74) Mandataire: Cardon, Nicolas

(56) Documents cités:
- EP-A1- 2 138 750
- SU-A1- 1 078 179
- US-A- 3 374 858
- US-A- 4 679 597

## Description

La présente invention concerne un dispositif d'amortissement de vibrations dans un circuit hydraulique de transmission d'effort. Ce circuit hydraulique peut comprendre un émetteur hydraulique (ou cylindre émetteur) et un récepteur hydraulique (ou cylindre récepteur). Il s'agit par exemple d'un circuit hydraulique formant une commande hydraulique d'embrayage..

L'embrayage est notamment un embrayage de véhicule automobile.

Dans un tel cas, le circuit hydraulique formant la commande hydraulique d'embrayage comprend : un cylindre émetteur, un cylindre récepteur, et un canal hydraulique reliant ces cylindres.

Le cylindre émetteur coopère avec une pédale d'embrayage, et le cylindre récepteur coopère avec une butée d'embrayage de manière à modifier l'état du système d'embrayage.

Le fonctionnement du moteur thermique du véhicule génère des vibrations qui peuvent être transmises à l'embrayage, se propager via le circuit hydraulique, et atteindre la pédale d'embrayage, et donc le conducteur du véhicule.

Ces vibrations et, le cas échéant, le bruit qu'elles génèrent, constituent une gêne pour le conducteur et les occupants du véhicule.

Pour réduire ces vibrations, il est connu de la demande DE 3631507 d'augmenter l'inertie du circuit hydraulique formant la commande hydraulique d'embrayage en augmentant la longueur du canal de ce circuit hydraulique. Cependant une telle solution tend à augmenter l'encombrement lié à la présence du circuit hydraulique, ce qui n'est pas souhaitable.

Il est par ailleurs connu d'augmenter l'inertie du circuit hydraulique en diminuant la section de passage dans le canal du circuit pour le fluide circulant du cylindre émetteur vers le cylindre récepteur. Cependant, une diminution trop importante de cette section de passage tend à augmenter sensiblement les pertes de charge, ce qui nécessite un effort plus important à appliquer à la pédale d'embrayage lors d'un débrayage rapide et augmente le temps de retour à sa position initiale, notamment à basse température.

Il est connu de la demande EP 2 138 750 un dispositif atténuateur de perturbations acoustiques à implant souple.

Il est également connu de la demande de brevet SU 1078179 un dispositif d'amortissement de vibrations.

Il est connu de la demande US 2010/0181158 un cylindre récepteur dans lequel est disposé un insert ménageant :
- deux vis concentriques parcourues successivement par du fluide provenant du cylindre émetteur, et
- un passage sélectivement obturé par une vanne dont l'état ouvert ou fermé dépend de la température, ce passage permettant au fluide d'éviter le passage à travers les deux vis successives. Avec un tel cylindre récepteur, lorsque la température est basse, les pertes de charge dans les deux vis augmentent, du fait de la viscosité plus importante du fluide. Le déplacement du fluide devient alors plus difficile et le débrayage ou l'embrayage devient trop lent.

Il existe un besoin pour réduire les vibrations transmises par un circuit hydraulique de transmission d'effort, notamment pour la commande hydraulique d'embrayage, d'une façon qui soit simple, peu encombrante, et efficace.

L'invention vise à répondre à ce besoin et elle y parvient, selon l'un de ses aspects, grâce à un dispositif d'amortissement de vibrations hydrauliques selon la revendication 1. Dans une variante, le dispositif est configuré de manière à ce que, dans le dispositif, le fluide se rapproche continument de l'extrémité aval lors de son parcours depuis l'extrémité amont.

Le premier chemin présente une longueur supérieure à celle du deuxième chemin, de sorte que l'emprunt par le fluide de ce premier chemin permet d'augmenter l'inertie du circuit hydraulique. Ce premier chemin peut en outre présenter une section transversale réduite par rapport à celle qu'aurait le circuit hydraulique en l'absence du dispositif. La présence du deuxième chemin permet que cette augmentation de l'inertie du circuit hydraulique du fait de la présence du premier chemin ne soit pas systématique. La section transversale du deuxième chemin peut, ou non, être égale à celle des portions du circuit hydraulique adjacentes au dispositif. Le premier chemin peut comprendre une entrée pour le fluide provenant de l'extrémité amont et une sortie permettant au fluide de gagner l'extrémité aval du dispositif.

Dans une variante, le premier chemin comprend deux entrées pour le fluide provenant de l'extrémité amont, les deux entrées étant décalées longitudinalement l'une par rapport à l'autre, et une seule sortie permettant au fluide de gagner l'extrémité aval du dispositif. La présence de ces deux entrées permet de moduler la première longueur. En effet, selon que le fluide entre par l'une ou l'autre des entrées du premier chemin, il pourra par exemple parcourir toute la vis ménagée dans l'insert ou une fraction seulement de cette vis. Un tel dispositif permet ainsi de proposer plusieurs modifications distinctes de l'inertie du circuit hydraulique, en jouant sur des modifications de longueur différentes. Le dispositif peut alors comprendre un système d'obturation permettant d'obturer sélectivement l'une au moins de ces deux entrées, par exemple pour obturer sélectivement l'entrée située longitudinalement entre l'autre entrée et la sortie du premier chemin. Un tel système d'obturation n'ouvre par exemple cette entrée que lorsque la différence de pression de part et d'autre de cette entrée dépasse une valeur prédéfinie.

L'insert peut s'étendre le long de l'axe longitudinal du dispositif et comprendre une portion ayant une paroi latérale dans laquelle est ménagée la vis définissant le premier chemin. La vis peut être ménagée sur toute la hauteur, mesurée le long de l'axe longitudinal, de ladite paroi, ou sur une fraction seulement de cette hauteur.

Toute la portion de l'insert portant ladite paroi latérale peut être reçue dans le corps.

Au sens de la présente demande, « latéral » signifie « parallèlement à l'axe longitudinal du dispositif », et « section transversale » signifie « section mesurée perpendiculairement au passage du fluide ».

Selon un premier exemple de mise en oeuvre de l'invention, la vis définit la surface latérale extérieure de ladite paroi et la surface latérale intérieure de la paroi définit extérieurement le deuxième chemin. Ce dernier peut présenter au moins un rétrécissement. Un tel exemple de mise en oeuvre de l'invention permet que le dispositif soit relativement compact puisque l'espace intérieur de la vis peut servir à délimiter le deuxième chemin. Au sens de la présente demande, on désigne par « rétrécissement » une portion du deuxième chemin dont la section transversale correspond à un minimum de la section transversale du deuxième chemin. Le rétrécissement présente par exemple une section transversale comprise entre 10% et 20%, étant notamment égale à environ 15%, de la section transversale du reste du deuxième chemin.

Le rétrécissement peut être ménagé à l'une des extrémités longitudinales de la portion de l'insert portant ladite paroi latérale.

En variante, le rétrécissement peut être ménagé dans une zone se situant entre les extrémités longitudinales de ladite portion de l'insert et à distance de chacune de ces extrémités longitudinales.

Selon ce premier exemple de mise en oeuvre de l'invention, le dispositif peut comprendre un clapet obturant le deuxième chemin tant que la différence de pression entre l'amont et l'aval dudit clapet est inférieure à une valeur prédéfinie. La valeur prédéfinie dépend par exemple de performances imposées pour la commande hydraulique, notamment de performances en termes de temps de retour à sa position initiale de la pédale d'embrayage à basse température. Lorsque le clapet est ouvert, le fluide provenant de l'extrémité amont du dispositif peut ainsi se répartir entre le premier et le deuxième chemin, tandis que lorsque le clapet est fermé, tout le fluide provenant de l'extrémité amont du dispositif parcourt le premier chemin.

Le clapet peut être disposé en aval du rétrécissement, par exemple à hauteur de l'extrémité longitudinale de la portion de l'insert tournée vers l'extrémité aval du dispositif, voire au-delà de cette extrémité longitudinale de ladite portion de l'insert.

En variante, selon ce premier exemple de mise en oeuvre de l'invention, le dispositif peut être dépourvu d'un clapet obturant sélectivement le deuxième chemin, de sorte que ce deuxième chemin peut toujours être parcouru par le fluide qui se voit alors toujours offrir deux chemins alternatifs pour gagner l'extrémité aval du dispositif depuis l'extrémité amont du dispositif.

Selon un deuxième exemple de mise en oeuvre de l'invention, la vis définit une surface latérale de ladite paroi et le dispositif comprend un manchon élastiquement déformable s'étendant autour de l'axe longitudinal et appliqué contre ladite surface latérale, de manière à assurer l'étanchéité des différents filets de la vis, ledit manchon formant un clapet obturant le deuxième chemin tant que la différence de pression de part et d'autre dudit clapet est inférieure à une valeur prédéfinie.

Le manchon peut être réalisé en élastomère, par exemple en EPDM.

Selon ce deuxième exemple de mise en oeuvre de l'invention, lorsque le manchon s'écarte de la vis, il ouvre un passage définissant le deuxième chemin, le fluide pouvant alors contourner les filets du premier chemin.

Selon une première variante de ce deuxième exemple de mise en oeuvre de l'invention, la vis définit la surface latérale extérieure de la paroi de ladite portion de l'insert, et le deuxième chemin est disposé extérieurement au premier chemin. Le deuxième chemin est par exemple formé par l'espace situé entre le manchon, lorsqu'il est appliqué contre la vis, et la surface intérieure du corps.

Selon cette première variante, la paroi latérale peut définir intérieurement deux logements borgnes distincts se succédant le long de l'axe, ces deux logements étant fluidiquement isolés l'un de l'autre par l'existence d'un fond, ce dernier s'étendant notamment perpendiculairement à l'axe longitudinal. Le fond est alors disposé dans une zone intermédiaire entre les extrémités longitudinales de la portion de l'insert portant la paroi latérale.

Toujours selon cette première variante, la paroi latérale peut en alternative définir intérieurement un unique logement borgne s'étendant depuis l'une des extrémités longitudinales de ladite portion de l'insert. Le fond de ce logement borgne peut alors être disposé au niveau de l'autre extrémité longitudinale de cette portion de l'insert. Par exemple, le logement borgne s'étend depuis l'extrémité longitudinale de ladite portion de l'insert tournée vers l'extrémité amont du dispositif et le fond de ce logement borgne est formée par une paroi transversale disposée au niveau de l'extrémité de ladite portion de l'insert tournée vers l'extrémité aval du dispositif. Selon un autre exemple, le logement borgne s'étend depuis l'extrémité longitudinale de ladite portion de l'insert tournée vers l'extrémité aval du dispositif et le fond de ce logement borgne est formé par une paroi transversale disposée au niveau de l'extrémité de ladite portion de l'insert tournée vers l'extrémité amont du dispositif.

Toujours selon cette première variante, la paroi latérale peut en alternative être pleine, c'est-à-dire que la paroi latérale ne définit aucun logement intérieur.

Selon une deuxième variante de ce deuxième exemple de mise en oeuvre de l'invention, ladite portion de l'insert peut être creuse, la vis peut définir la surface latérale intérieure de la paroi de ladite portion de l'insert, et le deuxième chemin peut être disposé intérieurement au premier chemin. Le deuxième chemin est par exemple formé par une partie du logement intérieur délimité par ladite surface latérale intérieure. Cette partie du logement intérieur qui forme le deuxième chemin peut être délimitée extérieurement par le manchon lorsqu'il s'applique contre la vis. Une telle deuxième variante présente un encombrement réduit par rapport à la première variante de cet exemple.

Selon un troisième exemple de mise en oeuvre de l'invention :
- la vis définit une surface latérale extérieure de ladite paroi,
- le dispositif comprend un manchon élastiquement déformable s'étendant autour de l'axe longitudinal et appliqué contre ladite surface latérale de manière à assurer l'étanchéité des différents filets de la vis, ledit manchon formant un clapet obturant un deuxième chemin s'étendant extérieurement au premier chemin, encore appelé « deuxième chemin extérieur », tant que la différence de pression de part et d'autre dudit clapet est inférieure à une valeur prédéfinie, et
- la surface latérale intérieure de la paroi de ladite portion définit extérieurement un deuxième chemin, encore appelé « deuxième chemin intérieur », ce dernier présentant notamment au moins un rétrécissement.

Le deuxième chemin intérieur peut être dépourvu de clapet, de sorte qu'une circulation de fluide est toujours possible dans ce deuxième chemin intérieur, en plus de la circulation dans le premier chemin

En variante, le deuxième chemin intérieur peut être pourvu d'un clapet, ce dernier étant par exemple une vanne. La vanne et le manchon peuvent être associés à des seuils de valeur de différence de pression distincts. Par exemple, l'un de la vanne et du manchon est associé à un premier seuil de valeur de différence de pression et l'autre de la vanne et du manchon est associé à un deuxième seuil de valeur de différence de pression, supérieur au premier seuil. Dans un tel cas :
- lorsque la différence de pression de part et d'autre du clapet associé au deuxième chemin intérieur et lorsque la différence de pression de part et d'autre du clapet associé au deuxième chemin extérieur sont toutes deux inférieures au premier seuil, ces deux clapets sont fermés, de sorte que seul le premier chemin peut être parcouru par le fluide depuis l'extrémité amont du dispositif,
- lorsque la différence de pression de part et d'autre du clapet associé au deuxième chemin intérieur et lorsque la différence de pression de part et d'autre du clapet associé au deuxième chemin extérieur sont supérieures au premier seuil de valeur de différence de pression mais inférieures au deuxième seuil de valeur de différence de pression, seul l'un de ces clapets est ouvert, de sorte que le premier chemin et un seul des deuxièmes chemins peut être parcourus par le fluide depuis l'extrémité amont du dispositif,
- lorsque la différence de pression de part et d'autre du clapet associé au deuxième chemin intérieur et lorsque la différence de pression de part et d'autre du clapet associé au deuxième chemin extérieur sont toutes deux supérieures au deuxième seuil, ces deux clapets sont ouverts, de sorte que le premier chemin et les deuxièmes chemins peuvent être parcourus par le fluide depuis l'extrémité amont du dispositif.

Dans tout ce qui précède, l'axe de la vis peut être confondu avec l'axe du ou des clapets, c'est-à-dire que :
- la vis et le clapet peuvent être concentriques, lorsque le clapet est le manchon mentionné ci-dessus, et
- la vanne est positionnée sur l'axe de la vis, lorsque le clapet est formé par une vanne.

Dans tout ce qui précède, le ou les clapets peuvent être pilotés par une unité de commande.

Dans tout ce qui précède, le corps et l'insert peuvent être en matière plastique. Il peut s'agir ou non de la même matière plastique, par exemple du polyamide. Il s'agit par exemple de PA 66 chargé en fibres de verre.

Dans tout ce qui précède, l'insert peut être intégralement reçu dans le corps.

En variante, l'insert peut comprendre au moins une portion faisant saillie au-delà de l'insert. Il s'agit par exemple d'une portion ménagée à une extrémité longitudinale de l'insert.

Le dispositif peut former un des cylindres du circuit hydraulique, par exemple le cylindre émetteur ou le cylindre récepteur. En variante, le dispositif peut former une partie du canal hydraulique reliant le cylindre émetteur et le cylindre récepteur. Dans ce cas, le dispositif peut comprendre un connecteur à son extrémité aval pour la connexion avec la portion aval du canal hydraulique reliée au cylindre récepteur, et un connecteur à son extrémité amont pour la connexion avec la portion amont du canal hydraulique reliée au cylindre émetteur.

L'un des connecteurs est par exemple formé par la portion de l'insert faisant saillie au-delà du corps, tandis que l'autre connecteur peut être formé par une portion du corps.

L'insert forme par exemple le connecteur de l'extrémité aval du dispositif, respectivement amont, tandis que le corps forme le connecteur de l'extrémité amont du dispositif, respectivement aval.

Les deux connecteurs du dispositif peuvent être alignés le long de l'axe longitudinal du dispositif. L'un des connecteurs peut être mâle et l'autre peut être femelle. En variante, les deux connecteurs peuvent être de même type.

L'insert peut être rigidement couplé avec le corps, c'est-à-dire qu'il n'existe aucun degré de liberté entre le corps et l'insert. Ce couplage rigide peut être obtenu par soudure, par exemple.

Dans tout ce qui précède, le premier et le deuxième chemin sont disposés en parallèle l'un de l'autre.

L'invention a encore pour objet, selon un autre de ses aspects, un dispositif d'amortissement de vibrations hydrauliques, apte à être incorporé à un circuit hydraulique formant une commande hydraulique d'embrayage, le dispositif comprenant :
- un corps, et
- un insert reçu au moins partiellement dans le corps,
le dispositif s'étendant le long d'un axe longitudinal entre une extrémité amont et une extrémité aval définies par le sens de circulation d'un fluide dans ledit circuit hydraulique,
le dispositif définissant:
- un premier chemin ménagé dans l'insert, en forme de vis dont l'axe est l'axe longitudinal du dispositif, ledit chemin permettant au fluide présent au niveau de l'extrémité amont de gagner l'extrémité aval en parcourant une première longueur dans le dispositif, et
- au moins un deuxième chemin permettant au fluide présent au niveau de l'extrémité amont de gagner l'extrémité aval en parcourant une deuxième longueur dans le dispositif et sans parcourir le premier chemin, la première longueur étant supérieure à la deuxième longueur,
le dispositif comprenant un clapet obturant le deuxième chemin tant que la différence de pression de part et d'autre dudit clapet est inférieure à une valeur prédéfinie.

Tout ou partie des caractéristiques mentionnées ci-dessus s'applique à cet autre aspect de l'invention.

L'invention a encore pour objet, selon un autre de ses aspects, un circuit hydraulique formant une commande hydraulique d'embrayage, notamment pour véhicule automobile, comprenant un dispositif d'amortissement tel que mentionné ci-dessus.

L'invention pourra être mieux comprise à la lecture de la description qui va suivre d'un exemple non limitatif de mise en oeuvre de celle-ci et à l'examen du dessin annexé sur lequel :
- la figure 1 représente de façon schématique un exemple de dispositif selon un premier exemple de mise en oeuvre de l'invention,
- les figures 2 à 6 représentent différentes variantes d'un dispositif selon un deuxième exemple de mise en oeuvre de l'invention, et
- les figures 7 à 9 représentent deux variantes d'un dispositif selon un troisième exemple de mise en oeuvre de l'invention.

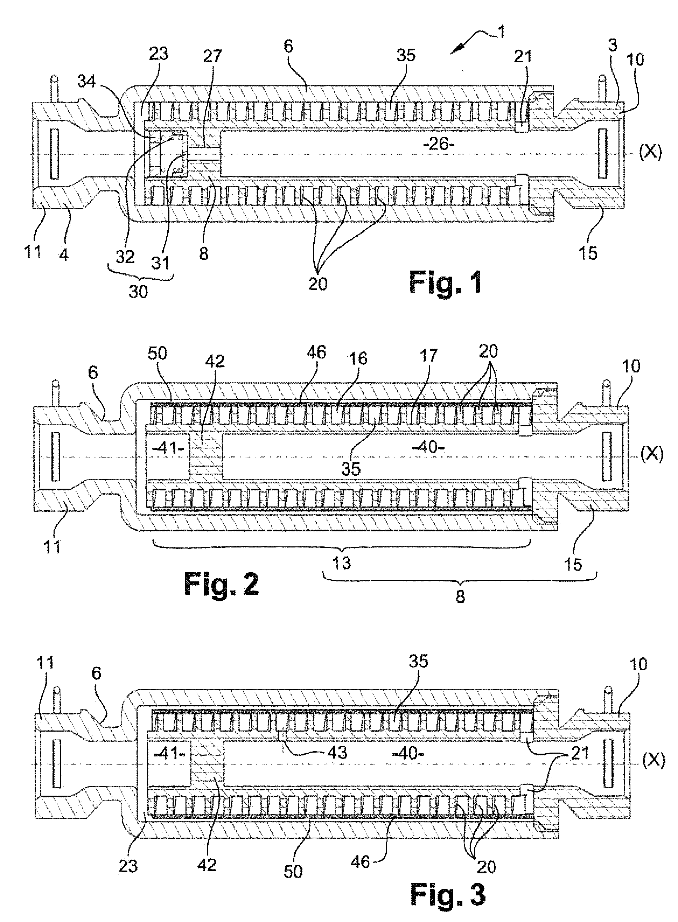

On a représenté sur la figure 1 un dispositif d'amortissement de vibrations hydrauliques 1 selon un premier exemple de mise en oeuvre de l'invention. Le dispositif 1 est destiné à être incorporé à un circuit hydraulique formant une commande hydraulique d'embrayage de véhicule automobile. Un tel circuit comprend classiquement un cylindre émetteur, un cylindre récepteur, et un canal hydraulique permettant une communication fluidique entre le cylindre émetteur et le cylindre récepteur.

Dans l'exemple considéré, le dispositif 1 fait partie du canal hydraulique, comprenant comme on le verra par la suite deux connecteurs 3 et 4 permettant respectivement la connexion du dispositif à la portion amont du canal hydraulique reliée au cylindre émetteur et à la portion aval du canal reliée au cylindre récepteur.

Comme représenté sur la figure 1, le dispositif 1 comprend :
- un corps 6, et
- un insert 8 reçu au moins partiellement dans le corps 6.

Le dispositif 1 s'étend ici le long d'un axe longitudinal X entre une extrémité amont 10 et une extrémité aval 11, les termes « amont » et « aval » faisant référence au sens de circulation du fluide parcourant le circuit hydraulique lorsque le dispositif 1 y est incorporé.

Le corps 6 et l'insert 8 sont dans l'exemple considéré réalisés en plastique, par exemple en polyamide tel que du PA 66 chargé en fibres de verre.

Comme représenté sur la figure 1, l'insert 8 et le corps 6 peuvent s'étendre tous deux le long de l'axe X.

Le corps 6 est ici creux, de sorte qu'un logement est ménagé dans le corps 6. L'insert 8 comprend dans l'exemple considéré une portion 13 disposée dans ce logement du corps 6.

L'insert 8 peut encore comprendre, comme dans le cas de l'exemple décrit, une portion 15 faisant saillie axialement au-delà du corps 6. Cette portion 15 fait ici saillie en direction de l'extrémité amont 10 du dispositif 1, et cette portion 15 est configurée pour définir le connecteur 3. Toujours dans cet exemple, le connecteur 4 est défini par une portion du corps 6.

L'insert 8 est ici rigidement couplé au corps 6, par exemple par soudure.

Comme représenté sur la figure 1, une vis 16 dont l'axe est l'axe X est formée dans la paroi latérale 17 de la portion 13 de l'insert 8. Cette vis 16 est dans l'exemple considéré ménagée sur toute la hauteur, mesurée le long de l'axe X, de la portion 13 de l'insert 8.

Dans l'exemple considéré, la vis 16 forme la surface latérale extérieure de la paroi latérale 17 et les filets 20 de la vis 16 viennent en butée contre la surface intérieure du corps 6.

La paroi 17 de la portion 13 est par ailleurs pourvue d'une ouverture 21 disposée au niveau de son extrémité longitudinale tournée vers l'extrémité amont 10 du dispositif. En outre, l'extrémité longitudinale de cette paroi tournée vers l'extrémité aval 11 du dispositif ne vient pas au contact du corps 6, de manière à définir une fenêtre 23 entre ladite extrémité longitudinale et ledit corps 6.

La portion 13 est ici creuse et délimite extérieurement un passage 26 débouchant entre les deux extrémités longitudinales de ladite portion 13. Comme représenté sur la figure 1, la section transversale de ce passage varie, présentant dans l'exemple décrit un minimum au niveau d'une portion 27 disposée en amont d'un clapet 30 et formant ainsi un rétrécissement pour le passage 26. Le clapet 30 est par exemple actionné en fonction de la différence de pression qu'il perçoit. Le clapet 30 est notamment fermé, empêchant alors toute circulation dans le passage traversant 26 tant que la différence entre la pression dans le passage en amont dudit clapet 30 et la pression dans le passage en aval dudit clapet 30 est inférieure à une valeur prédéfinie. Cette valeur est par exemple comprise entre trois et cinq bars.

Ce clapet 30 est dans l'exemple considéré une vanne comprenant un élément obturateur 31 maintenu dans une position dans laquelle il obture le rétrécissement 27 par un ressort 32 exerçant un effort axial prédéterminé sur cet élément 31. Ce ressort 32 prend appui sur une pièce creuse 34 disposée en aval du rétrécissement 27.

On va maintenant décrire le fonctionnement du dispositif 1 dont la structure vient d'être décrite.

L'ouverture 21 forme une entrée pour un premier chemin 35 correspondant à l'espace ménagé entre les filets 20 de la vis 16, tandis que la fenêtre 23 définit une sortie pour ce premier chemin. Le premier chemin 35 peut ainsi être emprunté par du fluide présent au niveau de l'extrémité amont 10 du dispositif 1 et cherchant à gagner l'extrémité aval 11 de ce dispositif 1. Le premier chemin 35 présente une première longueur correspondant à la distance parcourue par le fluide entre l'entrée 21 et la sortie 23.

Le passage traversant 26 définit, entre l'ouverture 21 et la fenêtre 23, un deuxième chemin pour le fluide circulant dans le dispositif 1 depuis son extrémité amont 10 vers son extrémité aval 11. Le deuxième chemin 26 présente une deuxième longueur correspondant à la distance parcourue par le fluide entre l'entrée 21 et la sortie 23 du premier chemin 35 lorsqu'il emprunte ce deuxième chemin 26.

La première longueur est ici supérieure à la deuxième longueur, de sorte que lorsque le fluide parcourt le premier chemin 35 et non le deuxième chemin 26, l'inertie du circuit hydraulique est augmentée.

Comme représenté, lorsque le fluide circule dans le dispositif 1 depuis l'extrémité amont 10 en utilisant l'un ou l'autre du premier et du deuxième chemin, il se rapproche continument de l'extrémité aval 11, c'est-à-dire qu'il n'effectue pas d'aller/retour parallèlement à l'axe X lors de son parcours dans le dispositif 1.

Plus précisément, lorsque la différence de pression entre l'aval et l'amont du clapet 30 dans le deuxième passage 26 est telle que l'élément obturateur 31 est maintenu en position fermée par le ressort 32, le deuxième chemin est obturé, de sorte que tout le fluide circulant dans le circuit hydraulique et traversant le dispositif 1 emprunte le premier chemin 35. Un amortissement satisfaisant des vibrations hydrauliques dans le circuit hydraulique de commande d'embrayage peut alors être obtenu.

Lorsque la différence de pression perçue par le clapet 30 est suffisante, le clapet 30 s'ouvre, de sorte que le premier chemin 35 est concurrencé par le deuxième chemin 26 qui offre au fluide un passage plus court vers l'extrémité aval 11 du dispositif 1.

On va maintenant décrire en référence aux figures 2 à 6 un dispositif d'amortissement 1 selon un deuxième exemple de mise en oeuvre de l'invention. Dans ces exemples, aucun passage traversant n'est ménagé à l'intérieur de la portion 13 de l'insert 8 portant la paroi 17.

Dans l'exemple de la figure 2, deux logements borgnes 40 et 41 sont ménagés à l'intérieur de la portion 13. Le logement borgne 40 communique avec l'extrémité de la portion 13 tournée vers l'extrémité amont 10 du dispositif, tandis que le logement borgne 41 communique avec l'extrémité de la portion 13 tournée vers l'extrémité aval11 du dispositif 1. Les logements 40 et 41 ont une même section transversale constante dans cet exemple.

Comme on le voit sur la figure 2, les deux logements 40 et 41 ne sont ici pas en communication fluidique l'un avec l'autre, un fond 42 séparant ces deux logements 40 et 41. Dans l'exemple considéré, ce fond 42 est positionné de telle sorte que la longueur du logement 41, mesurée le long de l'axe X, est inférieure à la longueur du logement 40.

Dans l'exemple de la figure 2, les filets 20 de la vis 16 ne sont pas en contact avec la surface intérieure du corps 6. Un manchon élastiquement déformable 46 est appliqué contre la surface extérieure de la paroi 17 et ce manchon 46 assure l'étanchéité des filets 20 les uns par rapport aux autres. Un espace vide, définissant le deuxième chemin 50 est ménagé entre le manchon 46, qui forme un clapet, et la surface intérieure du corps 6. Lorsque le corps 6 est un cylindre d'axe X, cet espace vide 50 est annulaire. Le manchon 46 est par exemple réalisé en élastomère, notamment en EPDM.

Le manchon 46 est ici disposé tout autour de la portion 13 portant la paroi latérale 17 et il s'étend sur toute la hauteur de la vis 16. Dans l'exemple considéré, il s'étend également longitudinalement au niveau de l'ouverture 21 mais non longitudinalement au niveau de la fenêtre 23.

On va maintenant décrire le fonctionnement du dispositif 1 dont la structure vient d'être décrite.

Lorsque la différence de pression entre le premier chemin 35 et l'espace annulaire 50 est inférieure à une valeur prédéfinie, le clapet reste appliqué contre la surface extérieure de la paroi 17, de sorte que le fluide circulant entre les filets 20 reste canalisé dans le premier chemin 35.Tout le fluide circulant dans le canal hydraulique et traversant le dispositif 1 emprunte alors le premier chemin 35, de sorte qu'un amortissement satisfaisant des vibrations hydrauliques dans le circuit hydraulique de commande d'embrayage peut être obtenu.

Lorsque la différence de pression de part et d'autre du manchon 46 est suffisante, le manchon 46 se déforme vers l'extérieur, de sorte que le fluide peut gagner l'espace annulaire 50 formant le deuxième chemin. Le premier chemin est alors concurrencé par le deuxième chemin 50 qui offre au fluide un passage plus court vers l'extrémité aval 11 du dispositif 1.

L'exemple de la figure 3 diffère de celui qui vient d'être décrit par le fait que le premier chemin 35 comprend une entrée additionnelle 43 en plus de l'entrée 21. Cette entrée additionnelle 43 est ici formée par un trou ménagé dans la paroi 17 dans une zone intermédiaire distante de l'entrée 21 et de la sortie 23 du premier chemin 35. Le fluide traversant dans le dispositif 1 en provenance de l'extrémité amont 10 peut ainsi ne pénétrer dans le premier chemin 35 qu'au niveau de cette entrée additionnelle 43, évitant ainsi une partie de la vis 16. Ainsi, selon qu'il pénètre dans le premier chemin 35 par l'entrée 21 ou par l'entrée 43, l'allongement de trajet du fluide induit par l'emprunt du premier chemin 35 n'est pas le même. Un système d'obturation non représenté peut, le cas échéant, être associé à l'entrée additionnelle 43 pour obturer sélectivement cette entrée 43.

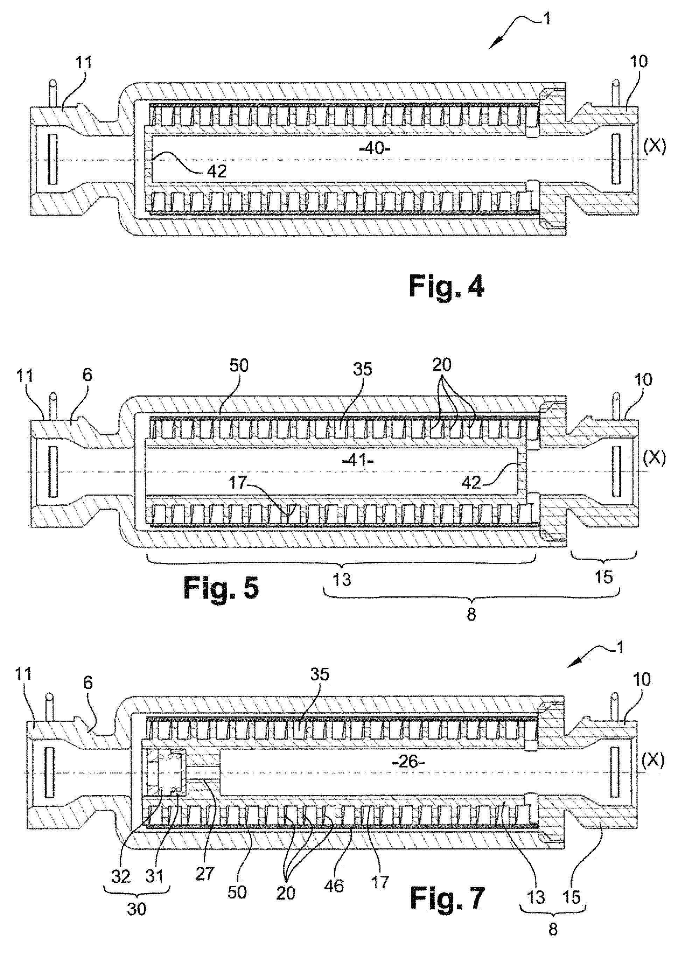

L'exemple de la figure 4 diffère de celui qui a été décrit en référence à la figure 2 par le fait que le logement borgne 40 s'étend sur sensiblement toute la longueur de la portion 13, le fond 42 de ce logement étant disposé au niveau de l'extrémité de cette portion 13 qui est tournée vers l'extrémité aval 11 du dispositif.

L'exemple de la figure 5 diffère de celui qui a été décrit en référence à la figure 2 par le fait que le logement borgne 41 s'étend sur sensiblement toute la longueur de la portion 13, le fond 42 de ce logement étant disposé au niveau de l'extrémité de cette portion 13 qui est tournée vers l'extrémité amont 10 du dispositif 1.

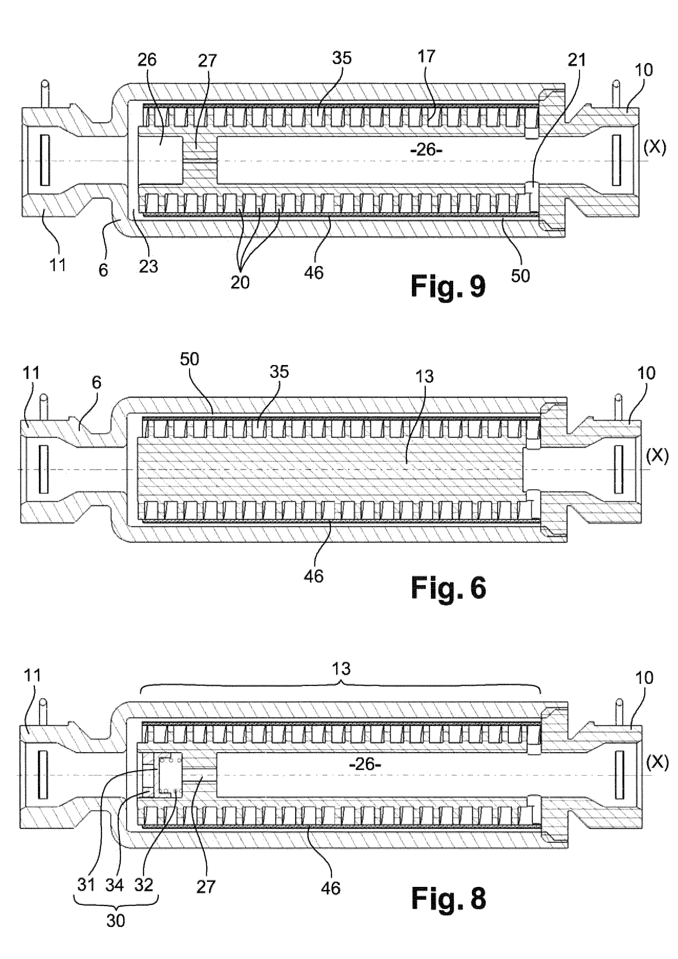

L'exemple de la figure 6 diffère de celui qui a été décrit en référence à la figure 2 par le fait que la portion 13 de l'insert 8 ne définit intérieurement aucun logement, ladite portion 13 étant ici pleine.

On va maintenant décrire en référence aux figures 7 à 9 un dispositif 1 selon un troisième exemple de mise en oeuvre de l'invention. Selon ce troisième exemple, le premier chemin 35 est sensiblement similaire à celui des exemples selon les figures 2 à 6, c'est-à-dire que l'étanchéité des filets 20 de la vis 16 n'est pas assurée par le contact avec la surface intérieure du corps 6, mais par le contact avec un manchon élastiquement déformable 46 formant un clapet.

Similairement à ce qui a été décrit en référence aux figures 2 à 6, un deuxième chemin 50, qualifié ici de « deuxième chemin extérieur », est défini par l'espace disposé entre le manchon 46, lorsque ce dernier est appliqué contre les filets 20, et la surface intérieure du corps 6.

Selon ce troisième exemple de mise en oeuvre de l'invention, un autre deuxième chemin 26, similaire à celui du premier exemple de mise en oeuvre de l'invention décrit en référence à la figure 1, est ménagé. Cet autre deuxième chemin 26 est ici qualifié de « deuxième chemin intérieur ».

Dans l'exemple de la figure 7, le deuxième chemin intérieur 26 comprend un clapet 30 similaire à celui décrit en référence à la figure 1. La vanne 30 et le manchon 46 sont par exemple associés à des seuils de valeur de différence de pression distincts. Par exemple, l'un de la vanne 30 et du manchon 46 est associé à un premier seuil S1 de valeur de différence de pression et l'autre de la vanne 30 et du manchon 46 est associé à un deuxième seuil S2 de valeur de différence de pression, S2 étant supérieur à SI.

Dans un tel cas :
- lorsque la différence de pression de part et d'autre de la vanne 30 et lorsque la différence de pression de part et d'autre du manchon 46 sont toutes deux inférieures à S1, ces deux clapets 30 et 46 sont fermés, de sorte que seul le premier chemin 35 peut être parcouru par le fluide,
- lorsque la différence de pression de part et d'autre de la vanne 30 et lorsque la différence de pression de part et d'autre du manchon 46 sont supérieures à S1 mais inférieures à S2, seul l'un de ces clapets 30 et 46 est ouvert, de sorte que le premier chemin 35 et un seul des deuxièmes chemins 26 et 50 peut être parcouru par le fluide,
- lorsque la différence de pression de part et d'autre de la vanne 30 et lorsque la différence de pression de part et d'autre du manchon 46 sont toutes deux supérieures à S2, ces deux clapets 30 et 46 sont ouverts, de sorte que le premier chemin 35 et les deuxièmes chemins 26 et 50 peuvent être parcourus par le fluide.

L'exemple de la figure 8 diffère de celui décrit en référence à la figure 7 par le fait que la vanne 30 est différente. Le ressort 32 prend ici appui contre la paroi transversale interne de la portion 13 l'insert 8 définissant l'aval du rétrécissement 27 et la force exercée par ce ressort 32 tend à maintenir l'élément obturateur 31 contre la pièce 34 pour obturer l'ajour ménagé dans cette pièce 34.

Dans l'exemple de la figure 9, le deuxième chemin intérieur 26 est dépourvu de clapet. Le rétrécissement 27 présente une section transversale très réduite tandis que le reste du deuxième chemin 26 a une section transversale constante. Le rétrécissement 27 présente par exemple une section transversale égale à environ 15 % de la section transversale du reste du deuxième chemin intérieur 26. Le deuxième chemin intérieur 26 reste alors toujours ouvert.

L'invention n'est pas limitée aux exemples qui viennent d'être décrits.

Ainsi, bien que tous les exemples illustrés concernent le cas où la vis 16 forme la surface extérieure de la paroi 17 de la portion 13, l'invention s'applique également au cas où la vis forme la surface intérieure de la paroi 17 de la portion 13.

L'expression « comprenant un » doit être comprise comme synonyme de l'expression « comprenant au moins un », sauf lorsque le contraire est spécifié.

## Revendications

1. Dispositif d'amortissement (1) de vibrations hydrauliques, apte à être incorporé à un circuit hydraulique formant une commande hydraulique d'embrayage, le dispositif (1) comprenant :
- un corps (6), et
- un insert (8) reçu au moins partiellement dans le corps (6),
le dispositif (1) s'étendant le long d'un axe longitudinal (X) entre une extrémité amont (10) et une extrémité aval (11) définies par le sens de circulation d'un fluide dans ledit circuit hydraulique, le dispositif (1) définissant:
- un premier chemin (35) ménagé dans l'insert (8), en forme de vis (16) dont l'axe est l'axe longitudinal (X) du dispositif, ledit chemin (35) permettant au fluide présent au niveau de l'extrémité amont (10) de gagner l'extrémité aval (11) en parcourant une première longueur dans le dispositif (1), et
- au moins un deuxième chemin (26, 50) permettant au fluide présent au niveau de l'extrémité amont (10) de gagner l'extrémité aval (11) en parcourant une deuxième longueur dans le dispositif (1) et sans parcourir le premier chemin (35), la première longueur étant supérieure à la deuxième longueur,
le dispositif (1) comprenant un clapet (30, 46) obturant le deuxième chemin (26, 50) tant que la différence de pression de part et d'autre dudit clapet (30, 46) est inférieure à une valeur prédéfinie.

2. Dispositif selon la revendication 1, étant configuré de manière à ce que, dans le dispositif, le fluide se rapproche continument de l'extrémité aval (11) lors de son parcours depuis l'extrémité amont (10).

3. Dispositif selon la revendication 1 ou 2, le premier chemin (35) comprenant une entrée (21) pour le fluide provenant de l'extrémité amont (10), et une sortie (23) permettant au fluide de gagner l'extrémité aval (11) du dispositif, ou
le premier chemin comprenant deux entrées (21, 43) pour le fluide provenant de l'extrémité amont (10), les deux entrées (21, 43) étant décalées longitudinalement l'une par rapport à l'autre, et une seule sortie (23) permettant au fluide de gagner l'extrémité aval (11) du dispositif (1).

4. Dispositif selon l'une quelconque des revendications précédentes, l'insert (8) s'étendant le long de l'axe longitudinal (X) du dispositif et comprenant une portion (13) ayant une paroi latérale (17) dans laquelle est ménagée la vis (16) définissant le premier chemin (35).

5. Dispositif selon la revendication 4, la vis (16) définissant la surface latérale extérieure de ladite paroi (17), et la surface latérale intérieure de ladite paroi (17) définissant extérieurement le deuxième chemin (26).

6. Dispositif selon la revendication 5, le deuxième chemin (26) présentant au moins un rétrécissement (27).

7. Dispositif selon la revendication 5 ou 6, le clapet (30) obturant le deuxième chemin (26) tant que la différence de pression dans le deuxième chemin (26) entre l'amont et l'aval dudit clapet (30) est inférieure à la valeur prédéfinie.

8. Dispositif selon la revendication 4, la vis (16) définissant une surface latérale de ladite paroi (17) et le dispositif comprenant un manchon élastiquement déformable (46) s'étendant autour de l'axe longitudinal (X) et appliqué contre ladite surface latérale, de manière à assurer l'étanchéité des différents filets (20) de la vis (16), ledit manchon (46) formant le clapet obturant le deuxième chemin (50) tant que la différence de pression de part et d'autre dudit clapet (46) est inférieure à la valeur prédéfinie, le manchon (46) étant notament en élastomère.

9. Dispositif selon la revendication 8, la vis (16) définissant la surface latérale extérieure de la paroi (17) de ladite portion (13) de l'insert (8) et le deuxième chemin (50) étant disposé extérieurement au premier chemin (35), ou
ladite portion (13) de l'insert (8) étant creuse, la vis (16) définissant la surface latérale intérieure de la paroi (17) de ladite portion (13) de l'insert (8), et le deuxième chemin (50) étant disposé intérieurement au premier chemin (35).

10. Dispositif selon la revendication 4, la vis (16) définissant une surface latérale extérieure de ladite paroi (17), le dispositif comprenant un manchon élastiquement déformable (46) s'étendant autour de l'axe longitudinal (X) et appliqué contre ladite surface latérale de manière à assurer l'étanchéité des différents filets (20) de la vis (16), ledit manchon (46) formant le clapet obturant un deuxième chemin (50) s'étendant extérieurement au premier chemin (35) tant que la différence de pression de part et d'autre dudit clapet (46) est inférieure à la valeur prédéfinie, et la surface latérale intérieure de la paroi (17) de ladite portion (13) définissant extérieurement un autre deuxième chemin (26).

11. Dispositif selon la revendication 10, l'autre deuxième chemin (26) étant dépourvu de clapet, ou l'autre deuxième chemin (26) comprenant un autre clapet (30).

12. Dispositif selon l'une quelconque des revendications précédentes, comprenant un connecteur (4) à son extrémité aval (11) pour la connexion avec la portion aval du canal hydraulique reliée au cylindre récepteur, et un connecteur (3) à son extrémité amont pour la connexion avec la portion amont du canal hydraulique reliée au cylindre émetteur, l'un des connecteurs (3, 4) étant notamment formé par une portion (15) de l'insert (8) faisant saillie au-delà du corps (6), et l'autre connecteur (3, 4) étant notamment formé par une portion du corps (6).

13. Dispositif selon la revendication 12, les deux connecteurs (3, 4) du dispositif (1) étant alignés le long de l'axe longitudinal (X) du dispositif (1).

14. Dispositif selon l'une quelconque des revendications précédentes, le corps (6) et l'insert (8) étant réalisés en matière plastique.

15. Circuit hydraulique formant une commande hydraulique d'embrayage, notamment pour véhicule automobile, comprenant un dispositif d'amortissement (1) selon l'une quelconque des revendications précédentes.

## Patentansprüche

1. Dämpfungsvorrichtung (1) hydraulischer Schwingungen, die in einen Hydraulikkreis eingebaut werden kann, der eine hydraulische Kupplungssteuerung bildet, wobei die Vorrichtung (1) enthält:
- einen Körper (6) und
- einen Einsatz (8), der zumindest teilweise im Körper (6) aufgenommen wird,
wobei die Vorrichtung (1) sich entlang einer Längsachse (X) zwischen einem stromaufwärtigen Ende (10) und einem stromabwärtigen Ende (11) erstreckt, die durch die Strömungsrichtung eines Fluids im Hydraulikkreis definiert werden, wobei die Vorrichtung (1) definiert:
- einen ersten Pfad (35), der im Einsatz (8) in Form einer Schraube (16) vorgesehen ist, deren Achse die Längsachse (X) der Vorrichtung ist, wobei der Pfad (35) es dem im Bereich des stromaufwärtigen Endes (10) vorhandenen Fluid ermöglicht, zum stromabwärtigen Ende (11) zu gelangen, indem es eine erste Länge in der Vorrichtung (1) durchquert, und
- mindestens einen zweiten Pfad (26, 50), der es dem im Bereich des stromaufwärtigen Endes (10) vorhandenen Fluid ermöglicht, zum stromabwärtigen Ende (11) zu gelangen, indem es eine zweite Länge in der Vorrichtung (1) durchquert und ohne den ersten Pfad (35) zu durchqueren, wobei die erste Länge größer ist als die zweite Länge,
wobei die Vorrichtung (1) eine Ventilklappe (30, 46) enthält, die den zweiten Pfad (26, 50) verschließt, so lange die Druckdifferenz zu beiden Seiten der Ventilklappe (30, 46) niedriger als ein vorab definierter Wert ist.

2. Vorrichtung nach Anspruch 1, die so konfiguriert ist, dass in der Vorrichtung das Fluid sich bei seinem Durchgang vom stromaufwärtigen Ende (10) kontinuierlich dem stromabwärtigen Ende (11) nähert.

3. Vorrichtung nach Anspruch 1 oder 2, wobei der erste Pfad (35) einen Eingang (21) für das vom stromaufwärtigen Ende (10) kommende Fluid und einen Ausgang (23) enthält, der es dem Fluid ermöglicht, zum stromabwärtigen Ende (11) der Vorrichtung zu gelangen, oder
der erste Pfad zwei Eingänge (21, 43) für das vom stromaufwärtigen Ende (10) kommende Fluid, wobei die zwei Eingänge (21, 43) in Längsrichtung zueinander versetzt sind, und einen einzigen Ausgang (23) enthält, der es dem Fluid ermöglicht, zum stromabwärtigen Ende (11) der Vorrichtung (1) zu gelangen.

4. Vorrichtung nach einem der vorhergehenden Ansprüche, wobei der Einsatz (8) sich entlang der Längsachse (X) der Vorrichtung erstreckt und einen Teil (13) enthält, der eine Seitenwand (17) hat, in der die den ersten Pfad (35) definierende Schraube (16) vorgesehen ist.

5. Vorrichtung nach Anspruch 4, wobei die Schraube (16) die äußere Seitenfläche der Wand (17) definiert und die innere Seitenfläche der Wand (17) außen den zweiten Pfad (26) definiert.

6. Vorrichtung nach Anspruch 5, wobei der zweite Pfad (26) mindestens eine Verengung (27) aufweist.

7. Vorrichtung nach Anspruch 5 oder 6, wobei die Ventilklappe (30) den zweiten Pfad (26) verschließt, so lange die Druckdifferenz im zweiten Pfad (26) zwischen dem stromaufwärtigen und dem stromabwärtigen Teil der Ventilklappe (30) niedriger als der vorab definierte Wert ist.

8. Vorrichtung nach Anspruch 4, wobei die Schraube (16) eine Seitenfläche der Wand (17) definiert und die Vorrichtung eine elastisch verformbare Muffe (46) enthält, die sich um die Längsachse (X) erstreckt und gegen die Seitenfläche anliegt, um die Dichtheit der verschiedenen Gewindegänge (20) der Schraube (16) zu gewährleisten, wobei die Muffe (46) die Ventilklappe bildet, die den zweiten Pfad (50) verschließt, so lange die Druckdifferenz zu beiden Seiten der Ventilklappe (46) niedriger als der vorab definierte Wert ist, wobei die Muffe (46) insbesondere aus Elastomermaterial ist.

9. Vorrichtung nach Anspruch 8, wobei die Schraube (16) die äußere Seitenfläche der Wand (17) des Teils (13) des Einsatzes (8) definiert, und der zweite Pfad (50) außerhalb des ersten Pfads (35) vorgesehen ist, oder
der Teil (13) des Einsatzes (8) hohl ist, wobei die Schraube (16) die innere Seitenfläche der Wand (17) des Teils (13) des Einsatzes (8) definiert, und der zweite Pfad (50) innerhalb des ersten Pfads (35) vorgesehen ist.

10. Vorrichtung nach Anspruch 4, wobei die Schraube (16) eine äußere Seitenfläche der Wand (17) definiert, wobei die Vorrichtung eine elastisch verformbare Muffe (46) aufweist, die sich um die Längsachse (X) erstreckt und gegen die Seitenfläche anliegt, um die Dichtheit der verschiedenen Gewindegänge (20) der Schraube (16) zu gewährleisten, wobei die die Ventilklappe bildende Muffe (46) einen zweiten Pfad (50) verschließt, der sich außerhalb des ersten Pfads (35) erstreckt, so lange die Druckdifferenz zu beiden Seiten der Ventilklappe (46) niedriger als der vorab bestimmte Wert ist, und die innere Seitenfläche der Wand (17) des Teils (13) außen einen anderen zweiten Pfad (26) definiert.

11. Vorrichtung nach Anspruch 10, wobei der andere zweite Pfad (26) keine Ventilklappe hat, oder der andere zweite Pfad (26) eine andere Ventilklappe (30) enthält.

12. Vorrichtung nach einem der vorhergehenden Ansprüche, die einen Verbinder (4) an ihrem stromabwärtigen Ende (11) zur Verbindung mit dem stromabwärtigen Teil des mit dem Nehmerzylinder verbundenen Hydraulikkanals und einen Verbinder (3) an ihrem stromaufwärtigen Ende zur Verbindung mit dem stromaufwärtigen Teil des mit dem Geberzylinder verbundenen Hydraulikkanals enthält, wobei einer der Verbinder (3, 4) insbesondere von einem Teil (15) des Einsatzes (8) gebildet wird, der über den Körper (6) hinaus vorsteht, und der andere Verbinder (3, 4) insbesondere von einem Teil des Körpers (6) gebildet wird.

13. Vorrichtung nach Anspruch 12, wobei die zwei Verbinder (3, 4) der Vorrichtung (1) entlang der Längsachse (X) der Vorrichtung (1) ausgerichtet sind.

14. Vorrichtung nach einem der vorhergehenden Ansprüche, wobei der Körper (6) und der Einsatz (8) aus Kunststoff hergestellt sind.

15. Hydraulikkreis, der eine hydraulische Kupplungssteuerung insbesondere für ein Kraftfahrzeug bildet, die eine Dämpfungsvorrichtung (1) nach einem der vorhergehenden Ansprüche enthält.

## Claims

1. Hydraulic-vibration damping device (1) that can be incorporated into a hydraulic circuit forming a hydraulic clutch control, the device (1) comprising:
- a body (6), and
- an insert (8) housed at least partially in the body (6),
the device (1) extending along a longitudinal axis (X) between an upstream end (10) and a downstream end (11) which are defined in relation to the direction in which a fluid circulates in the said hydraulic circuit, the device (1) defining:
- a first path (35) formed in the insert (8), in the form of a screw (16) the axis of which is the longitudinal axis (X) of the device, the said path (35) allowing the fluid present at the upstream end (10) to reach the downstream end (11) by travelling a first length through the device (1), and
- at least one second path (26, 50) allowing the fluid present at the upstream end (10) to reach the downstream end (11) by travelling a second length through the device (1) and without travelling the first path (35), the first length being greater than the second length,
the device (1) comprising a valve (30, 46) closing off the second path (26, 50) as long as the pressure difference across the said valve (30, 46) is below a predefined value.

2. Device according to Claim 1, being configured in such a way that, in the device, the fluid continuously nears the downstream end (11) in its travel from the upstream end (10).

3. Device according to Claim 1 or 2, the first path (35) comprising an inlet (21) for the fluid coming from the upstream end (10), and an outlet (23) allowing the fluid to reach the downstream end (11) of the device, or
the first path comprising two inlets (21, 43) for the fluid coming from the upstream end (10), the two inlets (21, 43) being longitudinally offset from one another, and a single outlet (23) allowing the fluid to reach the downstream end (11) of the device (1).

4. Device according to any one of the preceding claims, the insert (8) extending along the longitudinal axis (X) of the device and comprising a portion (13) having a lateral wall (17) in which the screw (16) that defines the first path (35) is formed.

5. Device according to Claim 4, the screw (16) defining the exterior lateral surface of the said wall (17), and the interior lateral surface of the said wall (17) externally defining the second path (26).

6. Device according to Claim 5, the second path (26) having at least one narrowing (27).

7. Device according to Claim 5 or 6, the valve (30) closing off the second path (26) as long as the pressure difference in the second path (26) between the upstream and downstream side of the said valve (30) is below the predefined value.

8. Device according to Claim 4, the screw (16) defining a lateral surface of the said wall (17) and the device comprising an elastically deformable sleeve (46) extending around the longitudinal axis (X) and pressed against the said lateral surface so as to seal the various threads (20) of the screw (16), the said sleeve (46) forming the valve closing off the second path (50) as long as the pressure difference across the said valve (46) is below the predefined value, the sleeve (46) being notably made of elastomer.

9. Device according to Claim 8, the screw (16) defining the exterior lateral surface of the wall (17) of the said portion (13) of the insert (8) and the second path (50) being arranged externally to the first path (35), or
the said portion (13) of the insert (8) being hollow, the screw (16) defining the interior lateral surface of the wall (17) of the said portion (13) of the insert (8), and the second path (50) being arranged internally to the first path (35).

10. Device according to Claim 4, the screw (16) defining an exterior lateral surface of the said wall (17), the device comprising an elastically deformable sleeve (46) extending around the longitudinal axis (X) and pressed against the said lateral surface so as to seal the various threads (20) of the screw (16), the said sleeve (46) forming the valve closing off a second path (50) extending externally to the first path (35) as long as the pressure difference across the said valve (46) is below the predefined value, and the interior lateral surface of the wall (17) of the said portion (13) externally defining another second path (26).

11. Device according to Claim 10, the other second path (26) having no valve, or the other second path (26) comprising another valve (30).

12. Device according to any one of the preceding claims, comprising a connector (4) at its downstream end (11) for connection to the downstream portion of the hydraulic passage connected to the receiving cylinder, and a connector (3) at its upstream end for connection to the upstream portion of the hydraulic passage connected to the emitter cylinder, one of the connectors (3, 4) being notably formed by a portion (15) of the insert (8) projecting beyond the body (6), and the other connector (3, 4) being notably formed by a portion of the body (6).

13. Device according to Claim 12, the two connectors (3, 4) of the device (1) being aligned along the longitudinal axis (X) of the device (1).

14. Device according to any one of the preceding claims, the body (6) and the insert (8) being made of plastic.

15. Hydraulic circuit forming a hydraulic clutch control, notably for a motor vehicle, comprising a damping device (1), according to any one of the preceding claims.
